# EUROPÄISCHE PATENTSCHRIFT

(11) **EP 0 470 272 B1**
(45) Veröffentlichungstag und Bekanntmachung des Hinweises auf die Patenterteilung: **17.01.1996**
(21) Anmeldenummer: 90115050.8
(22) Anmeldetag: 06.08.1990
(51) Int. Cl.: G01S 5/10

(54) **Verfahren zur Lokalisation eines Mobilfunksenders**
Method for locating a mobile transmitter
Procédé de localisation d'un émetteur mobile

(43) Veröffentlichungstag der Anmeldung: 12.02.1992
(73) Patentinhaber: Ascom Radiocom AG, CH-4503 Solothurn (CH)
(72) Erfinder: Dzung, Dacfey, Dr., CH-5430 Wettingen (CH)
(74) Vertreter: Voss, Klaus, Dipl.-Ing.

(56) Entgegenhaltungen:
- EP-A- 0 120 520
- EP-A- 0 250 105
- EP-A- 0 320 913
- EP-A- 0 379 756
- US-A- 4 169 245

## Beschreibung

### Technisches Gebiet

Die Erfindung betrifft ein Verfahren zur Lokalisation eines mobilen Senders gemäss Oberbegriff des Anspruchs 1.

### Stand der Technik

Ein Verfahren der eingangs genannten Art ist z. B. bekannt aus "A new transmitter location searching algorithm based on geometric partitioning and local optimization", Chia Chi Huang, IEEE Vehicular Technology Conference, June 1988, pp. 653-655. Darin wird beschrieben, wie ein mobiler Sender lokalisiert werden kann, wenn die Signalübertragungszeiten (Phasen) zwischen Sender und mehreren fixen Basisstationen bekannt sind. Das Augenmerk wird auf einen stabilen Algorithmus zum Bestimmen der geographischen Lage des Senders gerichtet bei vorgegebenen Messdaten.

Auf die Ermittlung der Laufzeiten wird nicht näher eingegangen. Es wird nur gesagt, dass dies mit Hilfe von bekannten kurzen Schmalbandpulsen geschehen kann.

Eine derartige Laufzeitbestimmung ist aber mit gewissen Nachteilen behaftet. Das Sendegerät (z. B. ein Mobilfunktelefon) muss mit einem Schaltkreis zum Senden der spezifischen Lokalisierpulse ausgerüstet sein. Ferner muss ein Frequenzband für die Lokalisierpulse zur Verfügung stehen. Zwar ist es denkbar, für die Lokalisation dieselbe Frequenz zu benützen wie für die Datenübertragung. Allerdings muss die Datenübertragung dann zwecks Lokalisation des Senders immer wieder unterbrochen werden, was die mittlere Datenrate des Funkkanals natürlich reduziert.

Ein Verfahren der eingangs genannten Art ist z. B. aus der EP 0 379 756 A1 bekannt. Ein Mobilfunksender sendet modulierte HF-Signale aus. Uebertragen werden analoge Audio-Signale im Bereich von 300-800 Hz. In verschiedenen Basisstationen werden die HF-Signale empfangen und demoduliert. Die von einem Fernsehsender ausgestrahlten Signale werden als Zeitbasis für die Synchronisation verwendet. In den Basisstationen werden die Null-Durchgänge der Audio-Signale detektiert und mit einem entsprechenden Zeitcode versehen. Jeder Null-Stelle wird also ein Datenwort zugeordnet. Die von verschiedenen Basisstationen ermittelten Datenblöcke (welche eine Reihe der genannten Datenworte enthalten) werden an einen zentralen Rechner weitergegeben, der die Datenworte miteinander vergleicht und die Laufzeitunterschiede der HF-Signale berechnet. Falls ein mobiler Sender neben dem Audio-Signal auch einen Identifikationscode übermittelt, so kann dieser ebenfalls in die Schaltung zur Detektion der Null-Durchgänge eingegeben werden.

### Darstellung der Erfindung

Aufgabe der Erfindung ist es nun, ein Verfahren der eingangs genannten Art anzugeben, das ohne zusätzlichen senderseitigen Aufwand auskommt und die mittlere Datenrate des Kanals nicht beeinträchtigt.

Erfindungsgemäss zeichnet sich die Lösung durch die Merkmale des Kennzeichens des Anspruchs 1 aus.

Der Kern der Erfindung ist darin zu sehen, dass das eigentliche, mit den a priori unbekannten Daten modulierte Sendersignal gleichzeitig auch zur Lokalisation verwendet wird. Dadurch entfällt die Notwendigkeit eines zusätzlichen Senderschaltkreises zur Erzeugung eines Pulses. Ausserdem findet die mit der Lokalisation verbundene Datenverarbeitung vollständig in ortsfesten Anlagen statt, wo ohne Probleme genübend Rechenleistung zur Verfügung gestellt werden kann. Der Sender (z. B. das mobile Telefon) bleibt damit kompakt und kann auf die zur Datenübertragung gewünschten Funktionen beschränkt bleiben.

Ein weiterer wichtiger Punkt besteht darin, dass die zur Regeneration der Daten ohnehin erforderlichen Informationen voll ausgenützt werden. Für eine grobe Laufzeitschätzung werden gemäss der Erfindung die in einen fixen Zeitrahmen gesetzten Daten der verschiedenen Basisstationen verwendet und eine Feinauflösung wird, falls nötig, aus der Synchronisation des Empfängers in bezug auf die zu demodulierenden Basisbandsignale gewonnen.

Gemäss einer vorteilhaften Ausführungsform wird das Basisbandsignal vom mobilen Sender zu einem bezüglich des einheitlichen Zeitrahmens synchronisierten Zeitpunkt übertragen. Dies erlaubt die Bestimmung der absoluten Laufzeiten. Zur Ortsbestimmung reichen dann zwei Basisstationen aus.

Diese Ausführungsform lässt sich mit Vorteil in einem TDMA-System (vgl. z.B. ETSI/PT 12, Recommendation GSM 05.02, Januar 1990) oder in einem Slotted Aloha-System (vgl. z.B. das Standardwerk "Queueing Systems, Volume II: Computer Applications", L. Kleinrock, John Wiley & Sons, pp. 360-369) realisieren, da dort die Synchronisation ohnehin schon zur Datenübertragung verwendet wird.

Auf eine Synchronisation des mobilen Senders kann verzichtet werden, wenn die empfangenen Basisbandsignale von mindestens drei Basisstationen zur Lokalisation verwendet werden. D.h. das Basisbandsignal wird zu einem unbekannten Zeitpunkt vom Sender übertragen. Dieses Verfahren eignet sich entsprechend für Mobilfunksysteme, die nicht bereits per se eine Sendersynchronisation vorschreiben.

Um den Datentransfer zwischen den Basisstationen und einer koordinierenden zentralen Station (welche die geographische Lokalisation vornimmt) zu minimieren, werden die empfangenen Basisbandsignale - zumindest in den vorgegebenen Zeitintervallen - bereits in der jeweiligen Basisstation zu entsprechenden Datenfolgen demoduliert und zusammen mit der entsprechenden (ebenfalls in der Basistation ermittelten) Zeitverzögerung an die Zentrale weitergegeben. Diese braucht dann nur noch die verschiedenen Datenfolgen zu korrelieren und unter Verwendung der mitgeteilten Zeitverzögerungen die Feinabstimmung der Laufzeiten vorzunehmen. Angesichts der Tatsache, dass die Basisstationen ohnehin die Demodulation des empfangenen Basisbandsignals durchführen müssen, ist dies eine besonders günstige Variante der Erfindung.

Es ist aber durchaus auch denkbar, dass die empfangenen Basisbandsignale (in abgetasteter Form) direkt an eine zentrale Station zur Durchführung der Lokalisation weitergegeben werden. Zwar werden in diesem Fall mehr Daten übermittelt werden müssen. Dies ist aber nicht besonders gravierend, da dieser Abschnitt des Verfahrens nicht zeitkritisch ist.

Die Erfindung setzt nicht voraus, dass für die Laufzeitbestimmung sowohl Grob- als auch Feinschätzung durchgeführt werden. Wenn die Datenrate 1/T genügend gross (resp. der zeitliche Abstand T genügend klein) ist, kann zur Bestimmung der relativen Laufzeit das Korrelieren der Datenfolgen durchaus ausreichen. Dies vereinfacht natürlich das Verfahren erheblich.

Andererseits kann der zeitliche Abstand T der digitalen Daten so gross und der gegenseitige Abstand der Basisstationen so klein sein, dass die relativen Laufzeiten stets kleiner als der zeitliche Abstand T sind. Entsprechend entfällt die Grobschätzung.

Für die Feinauflösung wird vorzugsweise das Basisbandsignal mit einem Vielfachen der Datenrate 1/T abgetastet und daraus der bezüglich des einheitlichen Zeitrahmens optimale Abtastzeitpunkt bestimmt. Auch die Synchronisation bezüglich der empfangenen Basisbandsignale bildet nämlich ohnehin einen Teil des Datenübertragungs- resp. Demodulationsverfahrens. Die dabei gewonnene Information kann somit für die Zwecke der Erfindung eingesetzt werden.

Oft ist es aber für die Demodulation nicht nötig, den optimalen Abtastzeitpunkt zu kennen, da ein grob angenäherter ausreicht. In diesem Fall kann zur Verbesserung der Feinauflösung das empfangene Basisbandsignal zwischen den Abtastzeitpunkten interpoliert werden.

Wenn in den Basisstationen bei der Demodulation eine hochauflösende Kanalschätzung vorgenommen wird, dann kann natürlich auch die so ermittelte Stossanwort zur Ermittlung der Zeitverschiebung herangezogen werden.

Aus der Gesamtheit der abhängigen Patentansprüchen ergeben sich weitere vorteilhafte Ausführungsformen.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: eine vereinfachte Darstellung eines Mobilfunksystems;
- Fig. 2: eine schematische Darstellung des erfindungsgemässen Verfahrens;
- Fig. 3: das Prinzip der Interpolation zwecks Verbesserung der Feinauflösung; und
- Fig. 4: ein Blockschaltbild einer Vorrichtung zur Durchführung des Verfahrens.

Die in den Zeichnungen verwendeten Bezugszeichen und deren Bedeutung sind in der Bezeichnungsliste zusammenfassend aufgelistet. Grundsätzlich sind in den Figuren gleiche Teile mit gleichen Bezugszeichen versehen.

### Wege zur Ausführung der Erfindung

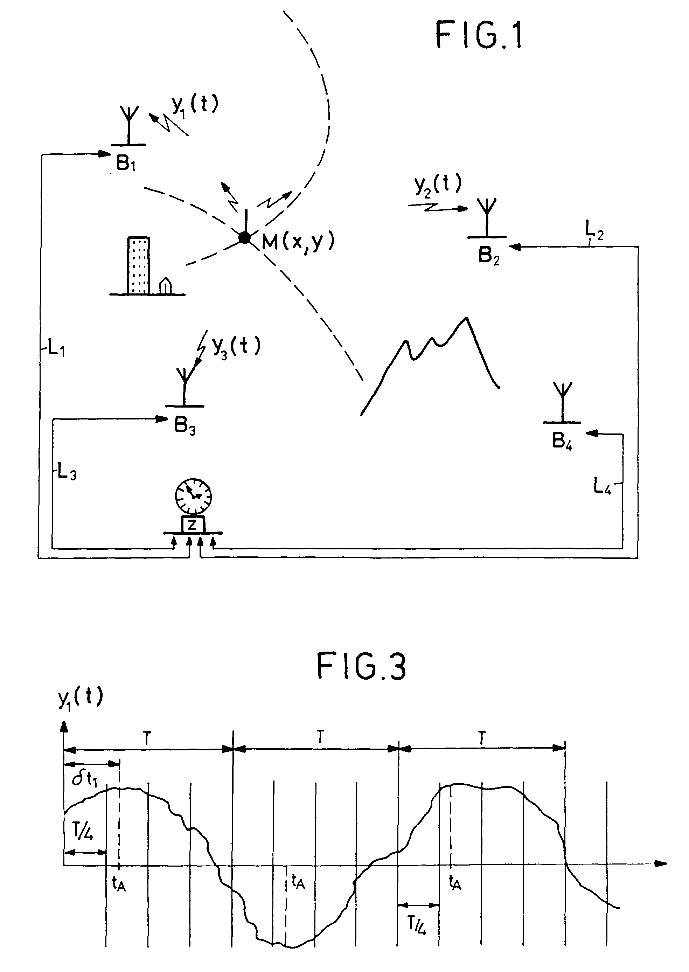

Fig. 1 zeigt einen Ausschnitt aus einem digitalen Mobilfunksystem, wie es zur Durchführung des erfindungsgemässen Verfahrens geeignet ist. Das System umfasst eine Vielzahl von ortsfesten Basisstationen B1, ..., B4, welche mit einer koordinierenden Zentralen Z durch leistungsfähige Uebertragungslinien L1, L4 verbundung sind. Die Basisstationen B1, ..., B4 sind in geeigneter Weise in der Landschaft aufgestellt. Sie können eine Funkverbindung mit einem mobilen Sender M herstellen. Es ist dabei vorauszusetzen, dass unter Berücksichtigung der geographischen Gegebenheiten (Hochhäuser, Hügel etc.) stets mindestens zwei der Basisstationen das vom mobilen Sender gesendete Signal mit ausreichender Qualität empfangen können, so dass sie das übertragene Basisbandsignal auch demodulieren können.

Die verschiedenen Basisstationen B1, ..., B4 sind entsprechend einem einheitlichen Zeitrahmen z.B. von der Zentrale Z her synchronisiert. Wenn also in den Basisstationen B1, ..., empfangene Basisbandsignale mit einer entsprechenden Zeitmarke versehen werden, dann können daraus im Prinzip die verschiedenen relativen Laufzeiten ermittelt werden.

Beim Mobilfunksystem handelt es sich um ein digitales. D.h., es werden nur digitale Daten übermittelt. Im Fall eines Funktelefons wird also ein Sprachsignal erst digitalisiert, bevor es übertragen wird. Die Codierung und die Modulation der Daten erfolgt gemäss einem vorgegebenen Uebertragungsverfahren. Zu diesem Zweck eignen sich im Prinzip alle Verfahren, die die Modulation eines Basisbandsignals und dessen Uebertragung mittels eines HF-Trägers vorsehen. Zu dieser Gruppe gehören beispielsweise die Quadratur Amplituden Modulation (QAM), die Continuous Phase Modulation (CPM) u.a.

Das erfindungsspezifische Ziel besteht darin, die Laufzeiten des Datensignals zwischen dem mobilen Sender M und mehreren Basisstationen B1, ..., B4 zu bestimmen. Wenn dies erst einmal erreicht ist, dann kann der mobile Sender M z.B. entsprechend dem eingangs zitierten Verfahren von Huang geographisch lokalisiert werden.

Die Hauptschwierigkeit, die es zu überwinden gilt, besteht darin, dass das gesendete Basisbandsignal durch verschiedene Kanäle zu den einzelnen Basisstationen gelangt. Nicht nur ist der Rauschabstand verschieden, sondern es tritt auch unterschiedliche Mehrwegausbreitung und unterschiedliches Fading auf. Somit ist es nicht möglich, die Laufzeiten durch unmittelbares Korrelieren der verschiedenen empfangenen Basisbandsignale zu erhalten.

Ein weiteres Problem liegt darin, dass das empfangene Basisbandsignal mit a priori unbekannten Daten moduliert ist. Anders als bei der Lokalisierung mittels eines kurzen Pulses ist auch die Ankunftszeit a priori nicht feststellbar.

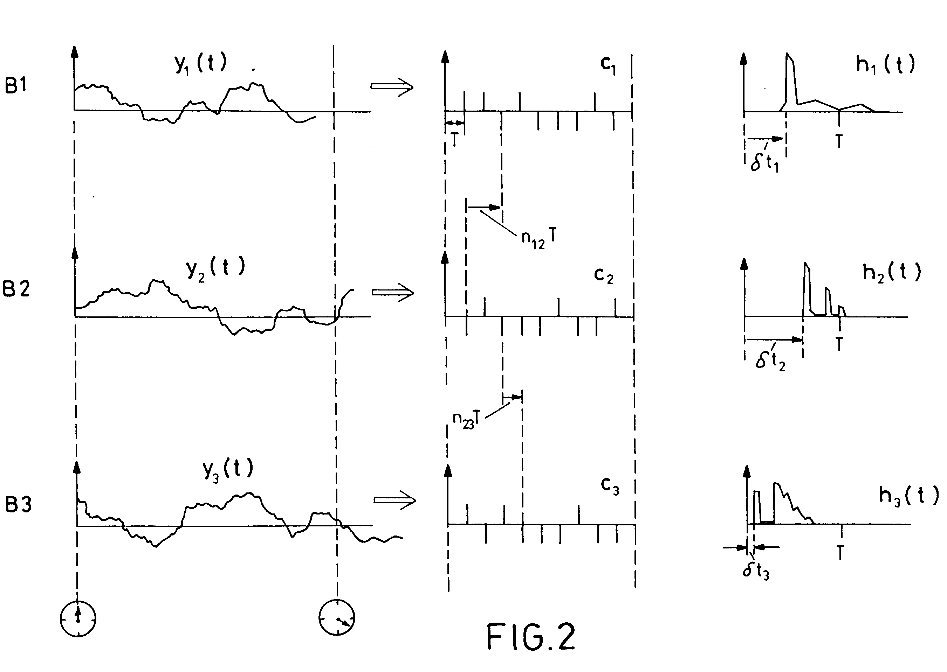

Anhand der Fig. 2 soll nun erläutert werden, wie die o.g. Probleme gelöst werden. Es wird angenommen, das vom mobilen Sender M kommende Signal werde von den drei Basisstationen B1, B2 und B3 empfangen. Ferner enthalte es digitale Daten mit einem vorgegebenen (und den Empfängern natürlich bekannten) zeitlichen Abstand T (resp. einer Datenrate 1/T).

In einem für jede Basisstation vorgegebenen Zeitintervall wird nun das empfangene Basisbandsignal y₁(t), y₂(t), y₃(t) zu einer Datenfolge c₁, c₂, c₃ demoduliert. Es ist zu beachten, dass weder die Basisbandsignale y₁(t), y₂(t), y₃(t) noch die Datenfolgen c₁, c₂, c₃ im vorgegebenen Zeitintervall übereinstimmen. Je nach Lage des genannten Zeitintervalls und je nach Laufzeit wird ein anderer Abschnitt der totalen, vom Sender übermittelten Datenfolge ermittelt. Ferner können auch noch geringfügige Fehler bei der Demodulation auftreten. Für die Zwecke der Erfindung ist es selbstverständlich nötig, dass zumindest ein wesentlicher Abschnitt der Daten näherungsweise (d.h. abgesehen von einigen Fehldemodulationen) übereinstimmt. Im vorliegenden Beispiel fallen die Zeitintervalle zeitlich zusammen.

Die Zeitintervalle sollen hinreichend lang sein, damit die Korrelationen auch mit ausreichender Zuverlässigkeit erfolgen können. Typischerweise betragen sie das hundert- bis tausenfache der Symboldauer T.

Der nächste Schritt besteht nun darin, dass eine Grobschätzung vorgenommen wird. Dazu werden die digitalen Datenfolgen c₁, c₂, c₃ miteinander korreliert. Es resultieren relative zeitliche Verschiebungen n₁₂T und n₂₃T, die einem ganzzahligen Vielfachen des Abstandes T der Daten entsprechen. Je nach Grösse der Datenrate 1/T kann dies schon ausreichen, um den mobilen Sender mit ausreichender Genauigkeit geographisch lokalisieren zu können. Bei einer Datenrate von z.B. 1 Mb/s führt die Grobschätzung zu einer Auflösung von etwa 300 m, was in vielen Fällen gut genug ist.

Bei verhältnismässig kleinen Datenraten von z.B. 37 kb/s, was einer Genauigkeit von ca. 8 km entspricht, ist dagegen in der Regel eine Feinauflösung erforderlich. Dazu wird eine Zeitverschiebung der basisbandbezogenen Synchronisation gegenüber dem einheitlichen Zeitrahmen verwendet. Dahinter verbirgt sich folgende Ueberlegung: Zur Demodulation des Basisbandsignals muss der optimale Abtastzeitpunkt oder zumindest eine Annäherung an diesen gefunden werden. Diese basisbandbezogene Synchronisation ist Teil des vorgegebenen Demodulationsverfahrens und muss zur zuverlässigen Rückgewinnung der Daten auf jeden Fall vorgenommen werden. Der optimale Abtastzeitpunkt wird nun im einheitlichen Zeitrahmen (bis auf ein ganzzahliges Vielfaches der Symboldauer T) bestimmt.

Die gesuchte Feinauflösung kann z.B. direkt aus dem Synchronisationsalgorithmus extrahiert werden. Gemäss einer bevorzugten Ausführungsform der Erfindung wird sie mit Hilfe einer hochauflösenden Kanalschätzung gewonnen, wie sie z.B. in der veröffentlichten Patentanmeldung EP-A1-0 301 282 beschrieben ist. Für die Zwecke der Erfindung genügt es, die Verzögerung δt₁, δt₂, δt₃ der Stossantwort h₁(t), h₂(t), h₃(t) des Kanals zu kennen, wobei vorausgesetzt wird, dass es sich dabei um den direkten Pfad und nicht (im Sinn eines pathologischen Falls) um ein Echo bei ausbleibendem direktem Pfad handelt.

Unter einer hochauflösenden Kanalschätzung ist eine zu verstehen, die die Stossanwort h₁(t), h₂(t), h₃(t) auch im Zeitbereich unterhalb des zeitlichen Abstandes T der Daten auflöst.

Die entgültigen relativen Laufzeiten ergeben sich schliesslich unmittelbar aus den zeitlichen Verschiebungen n₁₂T, n₂₃T und den Verzögerungen δt₁, δt₂, δt₃. Zur geographischen Lokalisation werden im vorliegenden Ausführungsbeispiel, wo die Sendezeit der Daten nicht bekannt ist, die relativen Laufzeiten (Laufzeitdifferenzen) zu mindestens drei Basisstationen benötigt. Der geometrische Ort des mobilen Senders, bei gegebener Laufzeitdifferenz zwischen zwei Basisstationen, ist eine Hyperbel mit den beiden Basisstationen in den Brennpunkten. Zur Bestimmung der Lage werden die Hyperbeln zu zwei Paaren von Basisstationen miteinander geschnitten. Dies ist in Fig. 1 angedeutet (gestrichelte Kurven).

Die bis anhin beschriebene Ausführungsform lässt eine grosse Zahl von Varianten zu. Diese sollen im folgenden kurz angedeutet werden.

Eine Vereinfachung des Verfahrens ergibt sich, wenn das Basisbandsignal vom mobilen Sender zu einem bezüglich des einheitlichen Zeitrahmens synchronisierten Zeitpunkt übertragen wird. Dies ist z.B. in den bekannten TDMA- und Slotted Aloha-Verfahren automatisch gegeben, da stets nur in einem definierten Zeitschlitz gesendet werden darf (für Time Division Multiple Access vgl. ETSI, GSM Recommendation 05.02; für Slotted Aloha siehe z.B. Kleinrock). In einem solchen Fall genügen im Prinzip bereits zwei Basisstationen zur Lokalisation, da die absoluten Laufzeiten bekannt sind. Es stört dabei nicht, dass theoretisch zwei Orte möglich wären (zwei sich schneidende Kreise haben zwei Schnittpunkte). Diese Mehrdeutigkeit kann nämlich ohne weiteres durch Plausibilitäts betrachtungen eliminiert werden, wird doch die Lokalisation in der Regel zeitlich periodisch durchgeführt.

Im Hinblick auf eine möglichst zuverlässige, weil redundanten Ortsbestimmung ist es vorteilhaft, wenn möglichst viele (z.B. vier oder mehr) Basisstationen das Basisbandsignal empfangen können. Das bedingt aber, dass die Empfangsbereiche entsprechend vieler Stationen sich überlappen, was natürlich einen nicht zu vernachlässigenden oekonomischen Aufwand zur Folge hat. Vor diesem Hintergrund kann es vorteilhaft sein, in einem bestehenden Mobilfunksystem zusätzliche Hilfsempfänger vorzusehen, die nur dazu da sind, ein Signal zu empfangen und es mit einer Zeitmarke versehen an die Zentrale weiterzuschicken.

Ob die Demodulation in den Basisstationen oder in der Zentrale erfolgen soll, bestimmt sich nach praktischen Ueberlegungen aus den Gegebenheiten des vorhandenen Mobilfunksystems. Beide Varianten haben ihre Vor- und Nachteile. In bezug auf das Prinzip der Erfindung sind solche Ueberlegungen jedoch von untergeordneter Bedeutung.

Wenn die empfangenen Basisbandsignale in der jeweiligen Basisstation zu entsprechenden Datenfolgen demoduliert werden und zusammen mit der zugehörigen Zeitverzögerung (Feinauflösung) an die zentrale Station zur Durchführung der geographischen Lokalisation weitergegeben werden, dann bleibt der Datenfluss zwischen den Stationen relativ klein.

Wenn dagegen das digitalisierte Basisbandsignal zusammen mit einer Zeitmarke unmittelbar an die Zentrale übermittelt wird (was z.B. für Hilfsempfänger denkbar wäre), dann kann die Intelligenz im Empfänger auf einem Minimum gehalten werden. Bei der basisbandsignalbezogenen Synchronisation kann es zur Demodulation u.U. genügen, das Basisbandsignal nur mit einem kleinen Vielfachen (z.B. Vierfachen) der Datenrate 1/T abzutasten. Um die Feinauflösung unter solchen Umständen zu verbessern, kann das empfangene Basisbandsignal zwischen den Abtastzeitpunkten interpoliert wird.

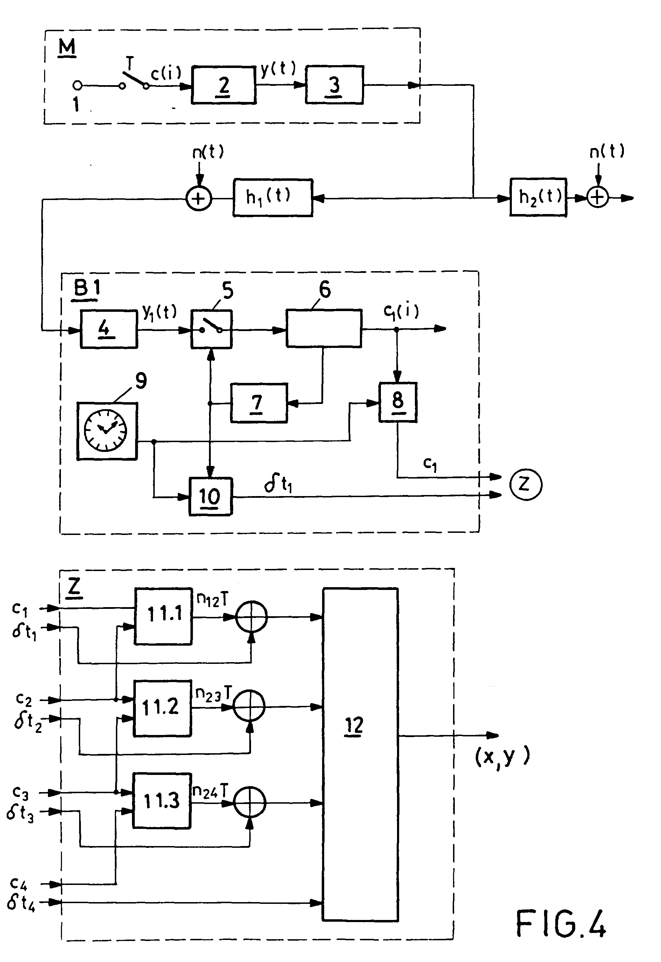

Fig. 3 veranschaulicht das soeben Gesagte. Im vorliegenden Beispiel wird das Basisbandsignal y₁(t) pro Symboldauer T viermal abgetastet. Der optimale Abtastzeitpunkt liege aber bei δt₁ = 5/16 T (siehe gestrichelte Linie). Für die Zwecke der Datendemodulation mag es genügen, den Abtastwert bei t = 1/4 T zu nehmen. Um die Feinauflösung gemäss einer bevorzugten Ausführungsform zu erhöhen, wird das Basisbandsignal zwischen den Abtastzeitpunktent interpoliert und aus der Interpolation der optimale Abtastzzeitpunkt ermittelt (z.B. durch bekannte Verfahren der Extremalwertbestimmung).

Wie bereits erwähnt, kann der zeitliche Abstand T der digitalen Daten so klein vorgegeben sein, dass zur Bestimmung der relativen Laufzeit das Korrelieren der Datenfolgen ausreicht. Mit anderen Worten, die zweite Stufe (Feinauflösung) kann entfallen. Dies ist typischerweise bei Datenraten ab einigen hundert kb/s gegeben.

Wenn die Basisstationen (gegebenenfalls ergänzt durch Hilfsempfänger) so nahe beieinander sind und der zeitliche Abstand T der digitalen Daten so gross ist, dass die relativen Laufzeiten stets kleiner als der zeitliche Abstand T sind, dann genügt die Feinauflösung zum Ermitteln der relativen Laufzeiten. D.h., die Grobschätzung könnte in keinem Fall eine Zeitverschiebung zu Tage fördern, sie ist also implizite immer gegeben.

Vorzugsweise wird die Lokalisation des mobilen Senders nach Ermittlung der Laufzeiten gemäss dem Verfahren von Huang durchgeführt. Konsequenterweise werden dann auch die Laufzeiten von mehr als der minimalen Anzahl Basisstationen ermittelt. Wegen der dann gegebenen Redundanz können unzuverlässige Messwerte eliminiert oder zumindest reduziert gewichtet werden. Algorithmen, die zuverlässigkeitsabhängige Gewichtungen erzeugen sind in der Nachrichtentechnik bestens bekannt.

Fig. 4 veranschaulicht die Mittel zur Durchführung des erläuterten Verfahrens. Eine Datenquelle 1 (Mikrofon, Speicher eines tragbaren Computers oder Fernkopierers, etc) liefert digitale Daten c(i) im zeitlichen Abstand T an einen Basisbandsignalgenerator 2. Dieser erzeugt ein zu sendendes Basisbandsignal y(t), welches mit einem HF-Modulator 3 einer Trägerschwingung aufmoduliert wird.

Die Trägerschwingung wird zu den verschiedenen Basisstationen übertragen und erleidet dabei unterschiedliche Verzerrungen (Kanäle h₁(t), h₂(t); additives Rauschen n(t)).

Das von der Basisstation B1 empfangene HF-Signal wird vom HF-Demodulator 4 in ein Basisbandsignal y₁(t) übergeführt. Letzteres wird synchron abgetastet (Abtaster 5) und dann mit einem Demodulator/Equalizer 6 in eine Datenfolge c₁(i) übergeführt. Diese stimmt in der Regel (bis auf wenige Fehler) mit der im Sender erzeugten Datenfolge c überein.

Ein Synchronisierkreis 7 führt die basisbandsignalbezogene Synchronisation durch (Ansteuerung des Abtasters 5). Das Ausgangssignal desselben wird auch dem Verzögerungsauflöser 10 zugeführt. Letzterer bestimmt mit Hilfe des Zeitgebers 9 die für die Feinauflösung erforderliche Verzögerung δt₁. Aus der Datenfolge c₁ extrahiert ein Extraktor 8 gemäss der Vorgabe des Zeitgebers 9 die dem vorgegebenen Zeitintervall entsprechende Datenfolge c₁, d.h. c₁ ist ein Ausschnitt aus der ganzen, vom vorliegenden Empfänger geschätzten Datensequenz.

Die Datenfolge c₁ und die Verzögerung δt₁ werden über eine Datenleitung an die Zentrale Z übermittelt. Die Zentrale hat für jede zugeordnete Basisstation B1, B2, B3, B4 zwei Eingänge. Im folgenden wird vorausgesetzt, dass B1, ..., B4 vier Basisstationen sind, die vom gesuchten mobilen Sender ein Signal empfangen haben. In Korrelatoren 11.1, 11.2, 11.3 werden die Datenfolgen paarweise korreliert. Auf diese Weise werden die Zeitverschiebungen n₁₂T, n₂₃T, n₃₄T gefunden. Zu diesen werden die Zeitverzögerungen δt₁, δt₂, δt₃ addiert. Die resultierenden relativen Laufzeiten n₁₂T + δt₁, n₂₃T + δt₂, n₃₄T + δt₃ und δt₄ werden an den Lokalisationsschaltkreis 12 übergeben, welcher in bekannter Weise die geographische Ortsbestimmung (x,y) durchführt.

Fig. 4 zeigt zwar nur eines der vielen Ausführungsbeispiele der Erfindung. Die nicht gezeigten Varianten kann der Fachmann aber ohne weiters aus dem Beschriebenen ableiten.

Abschliessend kann festgehalten werden, dass die Erfindung die Lokalisation eines mobilen Senders allein aufgrund des gesendeten, nicht im voraus festgelegten Datensignals ermöglicht.

### Bezeichnungsliste

1 - Datenquelle; 2 - Basisbandsignalgenerator; 3 - HF-Modulator; 4 - Demodulator; 5 - Abtaster; 6 - Demodulator/Equalizer; 7 - Synchronisierkreis; 8 - Extraktor; 9 - Zeitgeber; 10 -Verzögerungsauflösör; 11.1, 11.2, 11.3 - Korrelatoren; 12 - Lokalisationsschaltkreis; B1, ..., B4 - Basisstationen; c₁, c₂, c₃ - Datenfolgen; c(i) - digitale Daten; h₁(t), h₂(t), h₃(t) - Stossantwort des Kanals; L1, ..., L4 - Uebertragungslinien; M - mobiler Sender; n₁₂T,. n₂₃T, n₃₄T - zeitlichen Verschiebungen; y(t) - zu sendendes Basisbandsignal; y₁(t), y₂(t), y₃(t) - empfangene Basisbandsignale; Z - Zentrale; δt₁, δt₂, δt₃, δt₄ - Verzögerungen.

## Patentansprüche

1. Verfahren zur Lokalisation eines mobilen Senders (M) eines Mobilfunksystems mit mindestens zwei örtlich festen Basisstationen (B1, ..., B4), wobei die relativen Laufzeiten eines Signals zwischen mobilem Sender (M) und den Basisstationen (B1, ..., B4) ermittelt werden und daraus die geographische Lage des Senders bestimmt wird, wobei zum Ermitteln der relativen Laufzeiten ein vom Sender mittels eines HF-Trägers übertragenes Basisbandsignal (y(t)), in einem je Basisstation (B1, ..., B4) vorgegebenen Zeitintervall verwendet wird, wobei die verschiedenen Zeitintervalle bezogen auf einen einheitlichen Zeitrahmen zumindest teilweise überlappen, dadurch gekennzeichnet, dass
a) der mobile Sender (M) das Basisbandsignal (y(t)) entsprechend aus a priori unbekannten in einem gegebenen zeitlichen Abstand T auftretenden digitalen Daten (c(i)) erzeugt, dass
b) das in jeder der mindestens zwei Basisstationen (B1, ..., B3) vom empfangenen HF-Träger übertragene Basisbandsignal (y₁(t), y₂(t), y₃(t)) demoduliert und in dem je Basisstation vorgegebenen Zeitintervall zu einer digitalen Datenfolge (c₁, c₂, c₃) regeneriert wird und dass
c) zur Bestimmung der relativen Laufzeiten, die grösser als der zeitliche Abstand T sind, die verschiedenen digitalen Datenfolgen (c₁, c₂, c₃) miteinander korreliert werden.

2. Verfahren nach Anspruch 1, dadurch gekennzeichnet, dass das Basisbandsignal (y(t)) vom mobilen Sender (M) zu einem bezüglich des einheitlichen Zeitrahmens synchronisierten Zeitpunkt übertragen wird.

3. Verfahren nach Anspruch 1, dadurch gekennzeichnet, dass das Basisbandsignal (y(t)) zu einem unbekannten Zeitpunkt vom Sender (M) übertragen wird und dass die empfangenen Basisbandsignale (y₁(t), y₂(t), y₃(t)) von mindestens drei Basisstationen (B1,..,B3) zur Lokalisation verwendet werden.

4. Verfahren nach Anspruch 1, dadurch gekennzeichnet, dass die empfangenen Basisbandsignale (y₁(t), y₂(t), y₃(t)) in der jeweiligen Basisstation (B1,..,B3) zu entsprechenden Datenfolgen (c₁, c₂, c₃) demoduliert werden, welche zusammen mit der entsprechenden Zeitverzögerung (δt₁, δt₂, δt₃) an eine zentrale Station (Z) zur Durchführung der geographischen Lokalisation weitergegeben werden.

5. Verfahren nach Anspruch 1, dadurch gekennzeichnet, dass die empfangenen Basisbandsignale (y₁(t), y₂(t), y₃(t)) direkt an eine zentrale Station (Z) zur Durchführung der Lokalisation weitergegeben werden.

6. Verfahren nach Anspruch 1, dadurch gekennzeichnet, dass zur Feinauflösung der Laufzeiten innerhalb eines zeitlichen Abstandes T eine Zeitverzögerung (δt₁, δt₂, δt₃) der basisbandbezogenen Synchronisation gegenüber dem einheitlichen Zeitrahmen verwendet wird.

7. Verfahren nach Anspruch 6, dadurch gekennzeichnet, dass zur Ermittlung der Zeitverzögerung (δt₁, δt₂, δt₃) der basisbandbezogenen Synchronisation gegenüber dem einheitlichen Zeitrahmen das Basisbandsignal (y₁(t), y₂(t), y₃(t)) mit einem Vielfachen der Datenrate 1/T abgetastet wird und daraus der bezüglich des einheitlichen Zeitrahmens optimale Abtastzeitpunkt (t_{A}) bestimmt wird.

8. Verfahren.nach Anspruch 6, dadurch gekennzeichnet, dass zur Verbesserung der Feinauflösung das empfangene Basisbandsignal (y₁(t), y₂(t ), y₃(t)) zwischen den Abtastzeitpunkten interpoliert wird.

9. Verfahren nach Anspruch 6, dadurch gekennzeichnet, dass zur Ermittlung der Zeitverzögerung (δt₁, δt₂, δt₃) die mit einer hochauflösenden Kanalschätzung bestimmte Stossanwort (h₁(t), h₂(t), h₃(t)) herangezogen wird.

## Claims

1. Method for locating a mobile transmitter (M) of a mobile radio system having at least two fixed-location base stations (B1 ..., B4), the relative transit times of a signal between the mobile transmitter (M) and the base stations (B1 ..., B4) being established and from them the geographical position of the transmitter being determined, a baseband signal (y(t)) transmitted by the transmitter by means of an RF carrier being used for establishing the relative transit times in a time interval preset for each base station (B1 ..., B4), the various time intervals at least partially overlapping with respect to a standard time frame, characterized in that
a) the mobile transmitter (M) generates the baseband signal (y(t)) correspondingly from previously unknown digital data (c(i)) occurring in a given time interval T, in that
b) the baseband signal (y₁(t), y₂(t), Y₃(t)) transmitted in each of the at least two base stations (B1, ..., B3) by the received RF carrier is demodulated and is regenerated in the time interval preset for each base station to form a digital data sequence (c₁, c₂, c₃) and in that
c) for determining the relative transit times, which are greater than the time interval T, the various digital data sequences (c₁, c₂, c₃) are correlated with one another.

2. Method according to Claim 1, characterized in that the baseband signal (y(t)) is transmitted from the mobile transmitter (M) at an instant which is synchronized with respect to the standard time frame.

3. Method according to Claim 1, characterized in that the baseband signal (y(t)) is transmitted from the transmitter (M) at an unknown instant and in that the received baseband signals (y₁(t), y₂(t), y₃(t)) from at least three base stations (B1,..,B3) are used for the locating operation.

4. Method according to claim 1, characterized in that the received baseband signals (y₁(t), y₂(t), y₃(t)) are demodulated in the respective base station (B1,..,B3) to form corresponding data sequences ((c₁, c₂, c₃), which are passed on together with the corresponding time delay (δt₁, δt₂, δt₃) to a central station (Z) for carrying out the geographical locating operation.

5. Method according to Claim 1, characterized in that the received baseband signals (y₁(t), y₂ (t), y₃(t)) are passed on directly to a central station (Z) for carrying out the locating operation.

6. Method according to Claim 1, characterized in that, for the fine resolution of the transit times within a time interval T, a time delay (δt₁, δt₂, δt₃) of the baseband-related synchronization with respect to the standard time frame is used.

7. Method according to Claim 6, characterized in that, for establishing the time delay (δt₁, δt₂, δt₃) of the baseband-related synchronization with respect to the standard time frame, the baseband signal (y₁(t), y₂(t), y₃(t)) is sampled at a multiple of the data rate 1/T and the optimum sampling instant (t_{A}) with respect to the standard time frame is determined from this.

8. Method according to Claim 6, characterized in that, to improve the fine resolution, the received baseband signal (y₁(t), y₂(t), y₃(t)) between the sampling instants is interpolated.

9. Method according to Claim 6, characterized in that, for establishing the time delay (δt₁, δt₂, δt₃), the step response (h₁(t), h₂(t), h₃(t)) determined with a high-resolving channel estimate is used.

## Revendications

1. Procédé de localisation d'un émetteur mobile (M) d'un système radio mobile comportant au moins deux postes de base (B1 ... B4) fixes dans l'espace, selon lequel on détermine les temps de parcours relatifs d'un signal entre un émetteur mobile (M) et les postes de base (B1 .. B4) pour en déduire la situation géographique de l'émetteur, et, pour déterminer les temps de parcours relatifs, on utilise un signal de bande de base (y(t)) transmis par une porteuse (HF) à partir de l'émetteur, dans un intervalle de temps prédéterminé dans chaque poste de base (B1 ... B4), les différents intervalles de temps, rapportés à une trame de temps uniforme, se chevauchant au moins partiellement,
procédé caractérisé en ce que
a) l'émetteur mobile (M) génère le signal de bande de base y(t) en fonction de données numériques (c(i)) , à priorit inconnues, se produisant dans un intervalle de temps (T) donné,
b) dans chacun d'au moins deux postes de base (B1 ... B3) , le signal de bande de base (y₁(t), y₂(t), y₃(t) transmis par la porteuse HF, est démodulé et régénéré dans chaque intervalle de temps prédéterminé par le poste de base pour former une suite numérique de données (c₁,c₂, c₃), et
c) pour déterminer les temps de parcours relatifs supérieurs à l'intervalle de temps (T), on effectue une corrélation des différentes suites de données numériques (c₁, c₂, c₃).

2. Procédé selon la revendication 1, caractérisé en ce que le signal de bande de base (y(t)) est transmis par l'émetteur mobile (M) à un instant synchronisé par rapport à la trame de temps uniforme.

3. Procédé selon la revendication 1, caractérisé en ce que le signal de bande de base (y(t)) est transmis à un instant inconnu de l'émetteur (M), et les signaux de bande de base reçus (y₁(t)), y₂(t), y₃(t) sont utilisés par au moins trois postes de base (B1 ... B3) pour la localisation.

4. Procédé selon la revendication 4, caractérisé en ce que les signaux de bande de base reçus (y₁(t), y₂(t), y₃(t)) sont démodulés dans chaque poste de base (B1 ... B3 ) pour former les suites de données correspondantes (c₁, c₂, c₃) qui sont transmises avec les temporisations correspondantes (δt₁, δt₂, δ₃) à un poste central (Z) pour effectuer la localisation géographique.

5. Procédé selon la revendication 1, caractérisé en ce que les signaux de bande de base reçus (y₁t), y₂(t), y₃(t) sont transmis directement à un poste central (Z) pour effectuer la localisation.

6. Procédé selon la revendication 1, caractérisé en ce que, pour la résolution fine des temps de parcours à l'intérieur d'un intervalle de temps (T), on utilise une temporisation (δt₁; δt₂ ; δt₃) de la synchronisation rapportée à la bande de base par rapport à la trame de temps uniforme.

7. Procédé selon la revendication 6, caractérisé en ce que, pour déterminer la temporisation (δt₁,δt₂, δt₃,) de la synchronisation rapportée à la bande de base par rapport à la trame de temps uniforme, on détecte le signal de bande de base (y₁(t), y₂ (t), y₃ (t)) avec un multiple du débit de données 1/T et on en déduit l'instant de détection optimal (t_{A}) par rapport à la trame de temps uniforme.

8. Procédé selon la revendication 6, caractérisé en ce que, pour améliorer la résolution fine, on effectue une interpolation du signal de bande de base reçu (y₁(t), y₂(t), y₃(t)) entre les instants de détection.

9. Procédé selon la revendication 6, caractérisé en ce que, pour déterminer la temporisation (δt₁, δt₂, δt₃), on utilise la réponse impulsionnelle (h₁ (t), h₂ (t)), h₃(t) définie par une évaluation de canal à résolution croissante.
